# EUROPEAN PATENT APPLICATION

(11) **EP 4 748 550 A1**
(43) Date of publication of application: **27.05.2026**
(21) Application number: 25217258.0
(22) Date of filing: 20.11.2025
(51) Int. Cl.: B29C 45/33, B29C 45/44

(54) **SWEPT CORE SYSTEM ASSEMBLY FOR INJECTION MOULDING**

(30) Priority: 20.11.2024 IN 202421090163
(71) Applicant: Huliot Pipes & Fittings Private Limited, Mumbai, Maharashtra 400025 (IN)
(72) Inventor: MACHLOF, Guy, 1214500 Galil Elyon (IL)
(74) Representative: Vossius & Partner Patentanwälte Rechtsanwälte mbB

(57) **Abstract**

Described herein is swept core system assembly comprising a swept core body mechanism and a core head mechanism. The swept core body mechanism comprises a linear movement profile and the core head mechanism comprises a tilted movement profile. Dividing the swept core body mechanism movement into two stages (linear and tilted core head movement) enables to reduce the swept operating sector. In other words, the tilted movement profile of the core head mechanism allows a reduced swept movement of an operating sector of the swept core system assembly.

## Description

### Field of invention

The present invention relates to an injection moulding tool. More particularly, the invention relates to a swept core system assembly for application in injection moulding tools.

### Background

Conventionally, plastic injection moulding tools are designed around the dimensions and orientation of the produced article relative to its parting surfaces. These factors determine the injection moulding tool size. Injection moulding tool is operated on a continuous production cycle of an injection moulding machine while positioned between its tie bars. The injection mould tool base size and its symmetrical positioning between the injection moulding machine tie bars affects the injection moulding machine size and the even distribution of the clamping force exerted upon the injection moulding tool parting surfaces as well as the pulling forces acting on the injection moulding machine tie bars.

Plastic articles containing swept profiled contours produced by injection moulding technology require swept movement of the cores embedded in the plastic injection moulding tool and sequenced to operate in the controlled plastic injection cycle of an injection moulding machine. This repeatable and fluent operation is vital for maintaining the article's quality over thousands of production cycles while minimising maintenance operations and consuming as little space as possible to keep injection moulding tool and machine sizes as small as possible thus controlling tool investment and production prices.

Usually, swept core systems are designed to move the swept core in a round profile repeatably in/out of the injection mould tool cavity by an arm connected to a pivot point within the injection mould tool base. This arm length and the cavity depth determines the operating sector surface area of the swept core's system movement. This adds volume to the injection mould tool base increasing its price.

To enable positioning the produced swept article cavity at the centre of the injection moulding tool base, the swept core system is often positioned off this centre. Thus, nearing the operating sector of the swept core system movement to the injection moulding machine tie bars. This forces the use of a larger than hydraulically required injection moulding machine to accommodate a swept article injection moulding tool. The oversized injection moulding machine increases the production price of the swept article.

Due to the volume required to accommodate the operating sector of the swept core system movement, incorporating an odd number of swept cores in a single injection moulding tool often results in an asymmetric injection moulding tool base. This asymmetry has harmful consequences to the combined flawless operation of the injection moulding tool and machine, leading to several issues. These include uneven distribution of the clamping force exerted onto the injection moulding tool parting surfaces, over time affecting the integrity of these surfaces and increasing tool's maintenance expenses. Additionally, uneven pulling loads acting on the injection moulding machine tie bars affecting over time the machine's balanced clamping operation and increasing its maintenance expenses. Moreover, uneven ejection loads on the ejection system of the injection moulding tool can cause increased wear on ejectors and ejectors guiding areas within tool's cavities, thereby escalating maintenance costs.

The continuous cyclical movements of the swept core, both inside and outside the cavity when the injection mould tool's parting surfaces are detached, can adversely affect the quality of the produced article in various ways. When the swept core enters the cavity, it is halted and pressed upon a stationary steel wall, sealing its end from the pressurised cavity plastic melt. The shearing stress between the swept core's sealing surface traveling on a round profile and the stationary wall surface compromises its tight seal fit over time causing the pressurised plastic melt to flash. When the swept core moves out of the cavity, it is guided by the solidified plastic injected and pressurised inside the cavity and by the pivoted arm connected to it. However, that plastic guidance is less supportive and can shift on swept core travel due to uneven plastic shrinkage and uneven article cavity support as parting surfaces are detached, possibly causing the swept core to scratch the inner surfaces of the produced article at its travel.

To accommodate the swept article injection moulding tool in a smaller injection moulding machine, a common practice is to design an off-centre cavity in the injection moulding tool enabling some clearance between the injection moulding machine tie bars and the swept core system operating sector.

However, this approach has drawbacks, as the off-centred cavity pressure leads to uneven distribution of the clamping force exerted onto the injection moulding tool parting surfaces. Over time, this uneven force affects the integrity of these surfaces and increases tool's maintenance costs. Additionally, the uneven pulling forces on the tie bars of injection moulding machine impact the machine's balanced clamping operation, further raising maintenance expenses.

Therefore, there is a need for an injection moulding tool assembly which overcomes the outlined drawbacks and limitations.

### Summary

The present invention discloses a swept core system assembly for application in injection moulding tools comprising a linear swept core sequenced movement mechanism.

In an embodiment of the present invention, use of a linear movement track for a swept core travel enables to position it between an injection moulding machine tie bars without needing to offset the swept article cavity to get clear of the tie bars. Thus, this avoids the need for an oversized injection moulding machine to produce a swept article.

According to an embodiment, the invention uses linear movement tracks embedded in an actuating plate case of the swept core system assembly for movement of the swept core swept core system assembly. The linear tracks are positioned in between the injection moulding machine tie bars enables to keep the swept article cavity in the centre of the injection moulding machine base even when using odd number of swept core systems and without compromising on a larger injection moulding machine. Thus, this avoids the harmful consequences of asymmetry between the injection moulding machine and the swept core system's base.

In an embodiment, the present invention additionally provides advantage of mitigating shearing stress. Adding a swept guide to the stationary wall and a complimentary recoiled roller to a swept core tilting head' sealing surface enables to guide the swept core tilting head into its locked position during a second stage, avoiding most of the shearing stress upon the sealing surfaces edges when the swept core moves into the cavity.

According to an embodiment of the present invention, the swept core system assembly comprises a swept core body mechanism and a core head mechanism. The swept core body mechanism comprises a linear movement profile and the core head mechanism comprises a tilted movement profile. Dividing the swept core body mechanism movement into two stages (linear and tilted core head movement) enables to reduce the swept operating sector. In other words, the tilted movement profile of the core head mechanism allows a reduced swept movement of an operating sector of the swept core system assembly.

In an embodiment, the swept core body mechanism comprises an actuating rod and a swept core cylinder. In an initial state, the actuating rod is in a forward position and the swept core system assembly is locked. In operation, the swept movement of the swept core system assembly comprises three stages, a first stage, a second stage and a third stage. The first stage comprises a non-swept under cut removal mechanism carried out through a first stage unit housing plate and a first stage actuating plate. The undercut removal mechanism is actuated linearly like a screw operation to release from and I.D (Inside Diameter) thread or a collapsing core system operation to release from a seal groove. During the first stage of operation, the actuating rod moves backwards in the direction of a proximal end, while pulling a first stage actuating plate till first system stage mechanism is fully backwards. The second stage comprises the core body operation. At this stage, a collapsing core unit is fully collapsed and thus pushes a first stage unit housing plate and a second stage actuating plate backwards enabling the swept core cylinder to reach a predefined distance/safe distance from a swept core head to allow tilting initiation of the swept core head. A system actuating plate case houses the first stage actuating plate, the second stage actuating plate and a third stage actuating plate at the end of the second stage along with the backwards movement as the second stage actuating plate reaches the third stage actuating plate. The system actuating plate case is positioned on a cavity block. The third stage comprises the operation of core head mechanism, wherein the first stage unit housing plate then moves backwards causing the second stage actuating plate to reach a third stage actuating plate separator and begin a third stage wherein the core head is fully tilted. According to the invention, injection mold's cavity is split in half into two surfaces which is referred to as product plates (usually: A for fix side half and B for moveable side half). It is locked and touching while injection occurs.

In order to describe the status of core system components in reference to the injection mold's surfaces, it can be said that the cavity block is positioned at mould's product plate housing both cores at an unlocked mold half's position. These surfaces are in an unlocked state while the core system is moving.

### BRIEF DESCRIPTION OF THE DRAWINGS

The invention will be described further, by way of example, with reference to the accompanying drawings, in which:
**Figure 1(a)** illustrates a perspective view of an initial closed state of a swept core system assembly according to an embodiment of the present invention.
**Figured 1(b)** illustrates a magnified view of a core head mechanism according to an embodiment of the present invention.
**Figure 2(a)** illustrates a perspective view of a first open position of swept movement of the swept core system assembly according to an embodiment of the present invention.
**Figured 2(b)** illustrates a magnified view of the core head mechanism during the first open position as shown in Figure 2(a) according to an embodiment of the present invention.
**Figure 3(a)** illustrates a perspective view of a second open position of swept movement of the swept core system assembly according to an embodiment of the present invention.
**Figure 3(b)** illustrates a magnified view of the core head mechanism during the second open position as shown in Figure 3(a) according to an embodiment of the present invention.
**Figure 4(a)** illustrates a perspective view of a fully open position/fully expanded stage of swept movement of the swept core system assembly according to an embodiment of the present invention.
**Figure 4(b)** illustrates a magnified view of the core head mechanism during the fully open position as shown in Figure 3(a) according to an embodiment of the present invention.

### DETAILED DESCRIPTION

The following description with reference to the accompanying drawings is provided to assist in a comprehensive understanding of exemplary embodiments of the invention.

The present invention relates to a swept core system assembly comprising a linear swept core sequenced movement mechanism.

In an embodiment, the present invention discloses a linear movement track for the swept core travel enables to position it between the injection moulding machine tie bars without needing to offset the swept article cavity to get clear of the tie bars. Thus, avoiding the use of an oversized injection moulding machine to produce a swept article.

The invention uses linear tracks for the swept core systems movement positioned in between the injection moulding machine tie bars enables to keep the swept article cavity in the centre of the injection moulding machine base even when using odd number of swept core systems and without compromising on a larger injection moulding machine, thus avoiding the harmful consequences of a-symmetricity between the injection moulding machine and inject moulding tool's base.

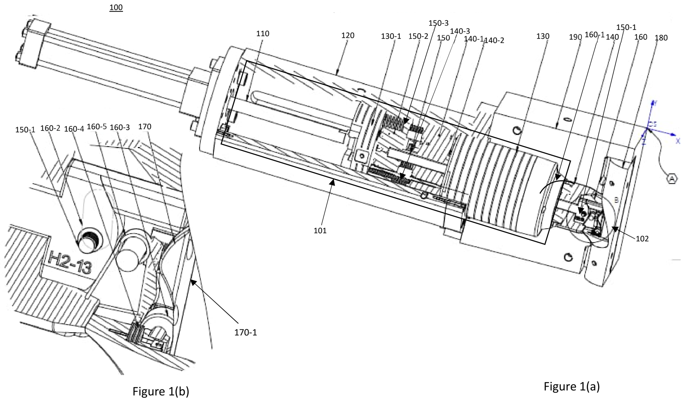

Figure 1(a) shows a perspective view of an initial closed state of a swept core system assembly 100 according to an embodiment of the present invention. The swept core system assembly 100 comprises a swept core body mechanism 101 and a core head mechanism 102. The swept core body mechanism 101 comprises a linear movement profile and the core head mechanism 102 comprises a tilted movement profile. The swept core body mechanism 101 comprises an actuating rod 110, an actuating plate case 120, a first stage unit housing plate 130 and a first stage actuating plate 130-1. The actuating rod 110 is connected to a first stage actuating plate 130-1 and configured to initiate a linear and measured movement. The measured movement travel length is the combined travel lengths of all the 3 stages described herein. Each stage actuating plate (first stage, second stage and third stage) has an exact traveling length required to fully actuate its intended operation, that is, under cut removal in first stage, swept core body retraction/linear motion in second stage and core head tilted swept profile motion in third stage. The actuating plate case 120 houses the first stage actuating plate 130-1, a second stage actuating plate 140-1 and a third stage actuating plate 150-2. The first stage unit housing plate 130 is configured to house the first stage mechanism which is a collapsing core unit. In an embodiment, any other mechanism can also be used for undercut removal and the use of the collapsing core unit is not limiting in respect of the present invention.

The first stage housing plate also actuates the second stage actuating plate 140-1. The first stage actuating plate 130-1 which is actuated by the actuating rod 110 and further actuates a mechanism of the first stage unit housing plate 130. The actuation of the first stage mechanism by the first stage actuating plate 130-1 enables guided linear movement of the first stage unit housing plate 130 through the linear movement tracks (not shown) embedded in the actuating plate case 120.

Furthermore, the swept core body mechanism 101 comprises a swept core cylinder 140, a second stage actuating plate 140-1, a swept core cylinder locker 140-2 and a second stage actuating plate separator 140-3. The swept core cylinder 140 constitutes a straight/linear portion of a swept core cavity of the swept core system assembly 100. The swept core cavity refers to the entire cavity contour of the swept core system assembly 100. The swept core cylinder 140 is configured to move out of the swept core cavity. More particularly, the swept core cavity has three portions with different contour geometries comprising an undercut removal first stage segment, a swept core body retraction/linear portion or second stage core body segment and core head tilted swept profile portion or the tilted head core segment.

The swept core cylinder 140 is actuated by the second stage actuating plate 140-1 and in turn actuates a third stage rod 150. The actuation of the third stage rod 150 by the swept core cylinder 140 enables guided linear movement of the third stage rod 150 during a closing motion of the swept core mechanism of the swept core system assembly. The swept core cylinder 140 supports the third stage rod 150 in a closed and locked position of the swept core system assembly 100. The third stage rod 150 is actuated by the third stage rod actuating plate 150-2 during an opening motion and by swept core cylinder 140 during the closing motion. The third stage rod 150 actuates the linear movement of a third stage rod pin 150-1. The third stage rod 150 further guides a planar movement and limits a swept movement of a swept core tilting head 160 to avoid/prevent misposition at both open and closed swept core system position. The swept core tilting head can tilt further more or less than required if not stopped tilting and supported (also against cavity injection pressure during the injection moulding process) at an exact distance from a resting position of the swept core tilting head, when it is closed or hanged between wall of the swept core cavity when the swept core tilting head is fully open. This is achieved by the support and guide of different areas within the third stage rod. The third stage rod pin 150-1 acts as a pivot point transferring its linear and guided movement to a swept movement of the swept core tilting head 160. The third stage rod actuating plate 150-2 is actuated during opening travel by second stage actuating plate 140-1 and by third stage rod 150 during closing travel.

Furthermore, the second stage actuating plate 140-1 is actuated by first stage unit housing plate 130 and in turn actuates the swept core cylinder 140. The swept core cylinder locker 140-2 connect swept core cylinder 140 to second stage actuating plate 140-1. The second stage actuating plate separator 140-3 resists friction caused by guided linear movement of the first stage actuating plate 130-1, while allowing independent movement of the first stage actuating plate 130-1. In an embodiment, the second stage actuating plate separator 140-3 is a spring. The spring 140-3 is acting between the two actuating plates and its designed spring force is greater than the friction force between the moving plate and the linear tracks of the swept core body mechanism 101. Furthermore, the designed spring force of the spring 140-3 is smaller than the friction between the stationary plate and the linear tracks of the swept core body mechanism 101. The spring 140-3 is acting as a movement separator between the two actuating plates. In an embodiment, the spring 140-2 can be replaced by any other suitable arrangement for movement separation between the two actuating plates. For instance, it can also be a mechanical lock separating each plate movement till it's designed traveling distance is complete, then releasing the stationary plate for its movement in series.

In an embodiment, the swept core body mechanism 101 further comprises a third stage rod actuating plate separator 150-3. The third stage rod actuating plate separator 150-3 resists friction caused by guided linear movement of first stage actuating plate 130-1, while allowing independent movement. In an embodiment, the third stage actuating plate separator 150-3 is a spring. The operation and function of the third actuating plate separator 150-3 is similar to the spring 140-3. Also, accordingly the third actuating plate separator 150-3 is not limiting to be a spring but can also be a mechanical lock separating each plate movement till it's designed traveling distance is complete, then releasing the stationary plate for its movement in series.

Figure 1(b) shows a magnified view of a core head mechanism 102 according to an embodiment of the present invention. The core head mechanism 102 comprises the swept core tilting head 160, a profiled slot 160-2, a roller 160-3, a roller shock absorber 160-4, a support unit 160-5, a profiler 170 and a main core 180.

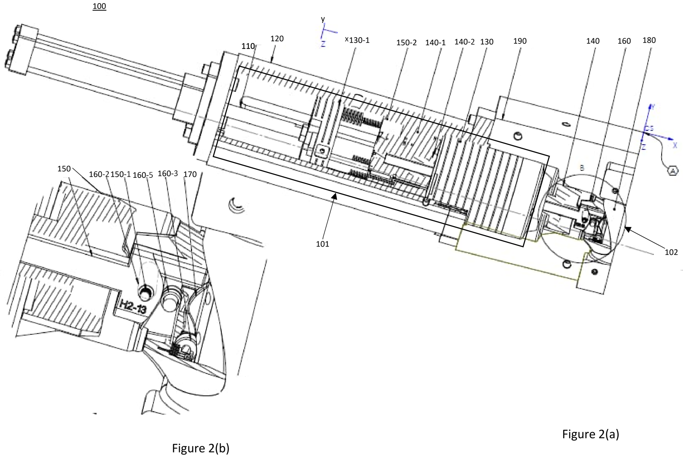

The swept core tilting head 160 is actuated by the third stage rod pin 150-1 and enabled to tilt due to a profiled shape of the profiled slot 160-2, as shown in Figures 2 to 4. The swept core tilting head 160 is guided by the third system stage rod 150 on a planar course of a swept core tilting head trajectory 160-1 and by the roller 160-3 as the swept core tilting head 160 travels on a swept profile of the profiler 170. The swept core tilting head trajectory 160-1 shows planar course of swept core tilting head 160 while tilting. The profiled slot 160-2 houses the third stage rod pin 150-1 within a profiled closed surrounding. The profiled closed surrounding enables shifting of the relative position of the pivot point of the third stage rod pin 150-1 above or below the centre of gravity of the swept core tilting head 160. This profiled slot 160-2 is a straight slot that houses the pivoting rod pin 150-1 and enables it to move within it as the pivoting point dynamically changes position along its axis. This shifting of relative position of the pivot point allows the swept core tilting head 160 to tilt. The roller 160-3 guides swept core tilting head 160 as the roller 160-3 rolls on the swept profile of the profiler 170 at a predefined safe distance from a body of the main core 180 till the swept core system assembly 100 is fully closed. The predefined safe distance maintains sharpness of the edges of the swept core tilting head 160 and prevents them from wear. This point is where the swept core tilting head 160 meets the profiler and the tilting commence. It must be done so the edges of the tilting head don't scratch upon the main core body before the tilting head reaches its final position within its main core resting pocket. Said predefined safe distance is, preferably, in the order of tens of a millimeters. For each core diameter and for each swept profile radius (defined in the industry's standards - see ISO 2651-1), the start of the tilting motion point (profiler edge) is at a different distance from main core.

According to the invention, the roller shock absorber 160-4 allows the roller 160-3 to backlash when the roller 160-3 contacts the profiler 170. In an embodiment the roller shock absorber 160-4 is a set of disc springs. The disc springs comprise a 'Belleville' spring (complies with DIN 16983). That being said, it is not necessary that the roller shock absorber 160-4 can only be in the form of disc springs. Other mechanical equivalents can also be used to serve the purpose. For instance, a compression spring with appropriate spring force and compressing length to withstand the force exerted upon it by the roller 160-3 as it rolls down and pushed back by the profiler 170 on a closing sequence.

The support unit 160-5 supports weight of the swept core tilting head 160 when it is out of the closed position of the swept core system assembly 100. The support unit 160-5 acts between the third system stage rod 150 and the swept core tilting head 160 to keep safe from hitting a cavity block 190 as shown in figures. In other words, the support unit 160-5 provides support for the swept core tilting head's own weight so it can hang between the cavity walls when the roller 160-3 is not touching the profiler 170 on the main core 180. The cavity block 190 houses the plastic injected part as the swept core system assembly 100 opens and closes.

In an embodiment, the support unit 160-5 is a torsion spring assembled on a pin within the swept core tilting head so it can dynamically act upon the swept profile moving walls. However, the support unit 160-5 can also be other appropriate dynamic motion spring mechanisms - like a plunger spring with a sliding base that can adjust its normal support as the wall it acts upon is being tilted in the swept profile.

Furthermore, the profiler 170 guides the roller 160-3 and swept core tilting head 160 tilts in and out of the main core 180. The main core 180 comprises a resting pocket for the swept core tilting head 160 to be positioned at the resting pocket so that the swept core tilting head 160 remains at a safe distance from body of the main core 180, thus keeping sharp edges of swept core tilting head 160 safe from wear. The main core 180 pockets swept core tilting head 160 when the swept core system assembly 100 is in the closed system position and supports the swept core tilting head 160 from shifting under the plastic melt injection pressure.

The operation and various stages of opening movements of the swept core system assembly from a closed position as shown in Figure 1(a) is described in the following paragraphs.

Figure 2(a) shows a perspective view of a first open position of the swept movement of the swept core system assembly 100 according to an embodiment of the present invention. At the beginning of the first stage, the actuating rod 110 moves backwards while pulling the first stage actuating plate 130-1 till the first stage mechanism moves fully backwards. First stage mechanism is a sub system within the linear swept core system that has no obligation to be a collapsing unit- It can also be some other undercut releasing linear moving mechanism, which linearly pushes, at the end of its travel, item 130 to position to continue actuating in series the second stage actuating plate.

A collapsing core unit as shown is fully collapsed and pushes the first stage unit housing plate 130 and the second stage actuating plate 140-1 backwards. This allows the swept core cylinder 140 to reach a predefined safe distance from the swept core tilting head 160 which is followed by tilting of the swept core tilting head. Further, the actuating plate case 120 is positioned on the cavity block 190, housing the first stage actuating plate 130-1, the second stage actuating plate 140-1 and the third stage actuating plate 150-2 at the end of second stage backward movement as a second stage actuating plate 140-1 reaches a third stage actuating plate 150-2. First stage unit housing plate 130 moves backwards by first stage inner mechanism thus moving the second stage actuating plate 140-1 backwards until it reaches the third stage actuating plate 150-2 enabling the third stage tilting of swept core tilting head 160. The swept core cylinder 140 moves backwards with the help of the swept core cylinder locker 140-2 connecting it to the second stage actuating plate 140-1 while nesting the third stage rod 150 in a forward position, thus releasing pressure and distancing backwards from swept core tilting head 160 in forward position in the pocket of main core 180. Third stage rod 150 is locked at the forward position by the third stage actuating plate 150-2 while housing third stage rod pin 150-1 engaged at the bottom of the profiled slot 160-2.

Furthermore, the swept core tilting head 160 is tilted forward, nesting within the pocket of the main core 180 while fully compressing the swept core tilting head support unit 160-5. The profiler 170 is nesting the roller 160-3 at a distal end of the swept profile track decompressing the roller shock absorber 160-4. The main core 180 remains stationary and pockets the swept core tilting head 160. At the bottom of the profiler swept track there is a recessed groove 170-1 that allows the roller to relieve its compressed state and decompress the Belleville springs (shock absorber 160-4) it sits upon.

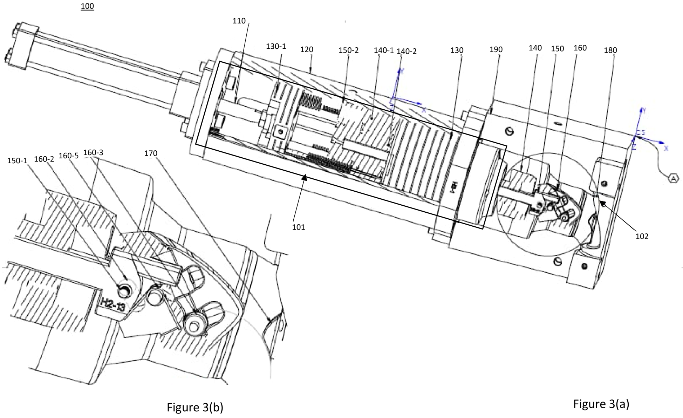

Figure 3(a) shows a perspective view of a second open position of the swept movement of the swept core system assembly 100 according to an embodiment of the present invention. At the beginning of the second stage, the actuating rod 110 moves backwards linearly pulling the first stage actuating plate 130-1 thus stacking the first stage actuating plate 130-1, the second stage actuating plate 140-1 and the third stage rod actuating plate 150-2, and releasing the third stage actuating plate 150-2 from its locked position. The actuating plates case 120 is positioned on cavity block 190 while housing the first stage actuating plate 130-1, the second stage actuating plate 140-1 and the third stage rod actuating plate 150-2 at backwards moving state. The First stage unit housing plate 130 is pulled backwards by the first stage inner mechanism thus pushing backwards the second stage actuating plate 140-1. The swept core cylinder 140 is pulled backwards by the swept core cylinder locker 140-2 by connecting to the second stage actuating plate 140-1 while guiding third stage rod 150 in backward motion. The third stage rod 150 is pulled backwards by the third stage rod actuating plate 150-2 while housing the third stage rod pin 150-1 engaged at the top of the profiled slot 160-2 and limiting the swept core tilting head 160 planar tilt (plane XY) to align linear movement out of cavity block 190. In this position, the third stage rod 150 houses the rod pin 150-1 while engaged at the back surface of the straight profiles slot 160-2. End faces (from both sides of the rod) of the profiled slot 160-2 are perpendicular to the xy plane - thus moving the central axis of the swept core tilting head 160 within it backwards. The swept core tilting head 160 is tilted backwards and supported by the support unit 160-5 to avoid a forward tilt. The profiler 170 is positioned within the main core 180 and above the centre or middle of the roller 160-3 to enable it to roll downwards retilting swept core tilting head 160 downwards on the next closing operation. The retilting can be defined as re-engaging the swept core tilting head 160 and shifting it downwards on the next closing operation. A closing operation can be defined as a reverse of the entire description hereinabove starting from Figure 1(a) till Figured 4(a), that is, a full opening operation sequence of the swept core system assembly - from a closed position to a fully open one. In fully closed position of the swept core system assembly 101, the system is locked and closed to inject a new plastic part or product. The main core 180 is stationary stabilizing injected plastic part till swept core system assembly 100 is fully open.

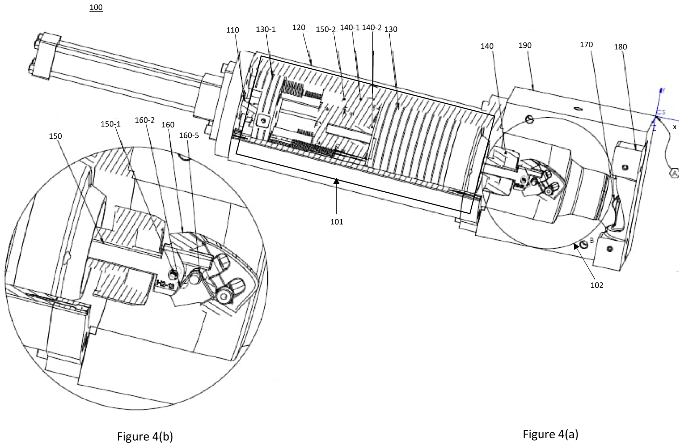

Figure 4(a) shows a perspective view of a fully open stage or a fully expanded stage of swept movement of the swept core system assembly 100 according to an embodiment of the present invention. The swept core system assembly 400 comprises a swept core body mechanism 401 and a core head mechanism 402. The swept core body mechanism 401 comprises a linear movement profile and the core head mechanism 402 comprises a tilted movement profile. The swept core body mechanism 401 describes positioning of parts of swept core body mechanism. On the other hand, the core head mechanism 402 describes positioning of parts of core head mechanism. The swept core body mechanism 401 comprises an actuating rod 110, an actuating plate case 120, a first stage unit housing plate 130, a swept core cylinder 140 and the third stage rod 150. In swept core body mechanism 401, an actuating rod 110 is fully backwards applying constant backwards pulling force on first stage actuating plate 130-1 thus locking first stage actuating plate 130-1, second stage actuating plate 140-1, third stage rod actuating plate 150-2 at their full back position. The actuating plates 120 is positioned on cavity block 190 while housing first stage actuating plate 130-1, second stage actuating plate 140-1, third stage rod actuating plate 150-2 at backwards locked state. The first stage unit housing plate 130 is pulled fully backwards by first stage inner mechanism thus locking backwards second stage actuating plate 140-1 and third stage rod actuating plate 150-2. The swept core cylinder 140 is pulled fully backward by swept core cylinder locker 140-2 by connecting to second stage actuating plate 140-1 clearing from plastic part cavity in the cavity block 190. The third stage rod 150 is pulled fully backwards by third stage rod actuating plate 150-2 while housing third stage rod pin 150-1 engaged at the top of swept core tilting head profiled slot 160-2 and limits planar tilt (plane XY) of swept core tilting head 160 to align linear movement clear out of plastic part cavity in cavity block 190. The swept core tilting head 160 is tilted backwords and supported by the support unit 160-5 to avoid forward tilt. The profiler 170 is positioned within the main core 180 and above the roller 160-3 centre to enable to roll downwards re-tilting swept core tilting head 160 downwards on the next closing operation. Main core 180 is stationary and ready to be retracted out of the plastic injected part.

The cavity block 190 of swept core system assembly is positioned at mold's product plate housing both cores at an unlocked mold half's position during opening and closing of the tool assembly.

## Claims

1. A swept core system assembly for injection moulding tools, comprising:
a swept core body mechanism comprising a linear movement profile; and
a core head mechanism comprising a tilted movement profile,
wherein the swept core body mechanism and the core head mechanism are configured to operate in a sequenced manner.

2. The swept core system assembly as claimed in claim 1, wherein the swept core body mechanism comprises an actuating rod, a swept core cylinder and a first stage unit housing plate, and/or
wherein the swept core body mechanism comprises a first stage actuating plate, a second stage actuating plate and a third stage actuating plate.

3. The swept core system assembly as claimed in claim 1 or 2, wherein a swept movement of the swept core system assembly comprises three stages, a first stage, a second stage and a third stage.

4. The swept core system assembly as claimed in any one of claims 1 to 3, wherein the actuating rod is configured to initiate a linear and measured movement, with the measured movement travel length being the combined travel lengths of all three stages, and/or wherein the first stage comprises a non-swept undercut removal mechanism carried out through the first stage unit housing plate and the first stage actuating plate.

5. The swept core system assembly as claimed in any one of claims 1 to 4, wherein during the second stage, the collapsing core unit is fully collapsed pushing the first stage unit housing plate and the second stage actuating plate backwards, and/or wherein the third stage comprises an operation of the core head mechanism, with the first stage unit housing plate moving backwards causing the second stage actuating plate to reach the third stage actuating plate separator and begin the third stage wherein the core head is fully tilted.

6. The swept core system assembly as claimed in any one of claims 1 to 5, wherein the core head mechanism comprises a swept core tilting head, a profiled slot, a profiler and a main core, and preferably
wherein the swept core tilting head is actuated by a third stage rod pin and enabled to tilt due to a profiled shape of the profiled slot.

7. The swept core system assembly as claimed in any one of claims 1 to 6, wherein a roller guides the swept core tilting head as the roller rolls on the swept profile of the profiler at a predefined safe distance from a body of the main core, and preferably wherein the profiler guides the roller and the swept core tilting head to tilt in and out of the main core.

8. The swept core system assembly as claimed in any one of claims 1 to 7, wherein a roller shock absorber allows the roller to backlash when the roller contacts the profiler, and/or wherein the core head mechanism comprises a support unit for supporting the weight of the swept core tilting head when it is out of the closed position of the swept core system assembly.

9. The swept core system assembly as claimed in claim 6, wherein the main core comprises a resting pocket for the swept core tilting head to be positioned at the resting pocket such that the swept core tilting head remains at a safe distance from the body of the main core.

10. The swept core system assembly as claimed in any one of claims 1 to 9, wherein at least one linear movement track for the swept core travel is positioned between an injection moulding machine tie bars, enabling the positioning of a swept article cavity at the center of the injection moulding machine base, and/or
wherein the at least one linear movement track is embedded in an actuating plate case of the swept core system assembly for the movement of the swept core.

11. The swept core system assembly as claimed in any of claims 1 to 10, wherein the actuating plate case houses the first stage actuating plate, the second stage actuating plate, and the third stage actuating plate at the end of the second stage along with the backwards movement as the second stage actuating plate reaches the third stage actuating plate, and/or
wherein a cavity block houses the plastic injected part as the swept core system assembly opens and closes.

12. A method of operating a swept core system assembly in an injection moulding tool, the method comprising:
performing a swept movement of the swept core system assembly in three sequential stages comprising a first stage, a second stage and a third stage, wherein.
the first stage comprises actuating a non-swept undercut removal mechanism through a first stage unit housing plate and a first stage actuating plate;
the second stage comprises a core body operation wherein a collapsing core unit is fully collapsed pushing the first stage unit housing plate and a second stage actuating plate backwards to enable a swept core cylinder to reach a predefined distance from a swept core head to allow tilting initiation of the swept core head; and
the third stage comprises an operation of a core head mechanism, wherein the first stage unit housing plate moves backwards causing the second stage actuating plate to reach a third stage actuating plate separator and begin the third stage wherein the core head is fully tilted.

13. The method as claimed in claim 12, wherein the method comprises initiating a linear and measured movement through an actuating rod, with the measured movement travel length being the combined travel lengths of all three stages.

14. The method as claimed in claim 12 or 13, wherein the third stage comprises actuating a swept core tilting head by a third stage rod pin and enabling the swept core tilting head to tilt due to a profiled shape of a profiled slot, and/or
wherein the method comprises guiding the swept core tilting head by a roller as the roller rolls on a swept profile of a profiler at a predefined safe distance from a body of a main core.

15. The method as claimed in any of claims 12 to 14, wherein the method comprises positioning at least one linear movement track for swept core travel between injection moulding machine tie bars, thereby enabling positioning of a swept article cavity at the centre of an injection moulding machine base.
